# EUROPEAN PATENT SPECIFICATION

(11) **EP 3 913 139 B1**
(45) Date of publication and mention of the grant of the patent: **09.08.2023**
(21) Application number: 21386026.5
(22) Date of filing: 11.05.2021
(51) Int. Cl.: D21H 19/12, A47G 19/03, B31F 1/07, B31F 1/08, D21H 19/66, D21H 21/16, D21H 25/00, D21H 27/00

(54) **METHOD OF PRODUCING PRINTED PAPER PLATES USING VARNISH WITHOUT THE USE OF PLASTIC FILM ON THEIR FINAL SURFACE**
VERFAHREN ZUR HERSTELLUNG VON BEDRUCKTEN PAPIERTELLERN UNTER VERWENDUNG VON LACK OHNE VERWENDUNG EINER KUNSTSTOFFFOLIE AUF IHRER ENDGÜLTIGEN OBERFLÄCHE
PROCÉDÉ DE PRODUCTION DE PLAQUES DE PAPIER IMPRIMÉES À L'AIDE DE VERNIS SANS UTILISER DE FILM PLASTIQUE SUR LEUR SURFACE FINALE

(30) Priority: 20.05.2020 GR 20200100263
(43) Date of publication of application: 24.11.2021
(73) Proprietor: Procos S.A. Manufacturing and Trading of Paper and Household Products, 32011 Inofita Viotia (GR)
(72) Inventor: PROKOS, Iosif, 14575 Attiki (GR)
(74) Representative: Panagiotidou, Effimia

(56) References cited:
- EP-A2- 0 162 540
- US-A- 4 026 458
- US-A1- 2008 015 098

## Description

The present invention relates to the manufacture of paper plates (regardless of shape), which have been printed - "decorated" and coated with a water-soluble dispersion varnish and can come into contact with foodstuffs without the use of a plastic film as a protective layer on the surface thereof.

Document EP0162540A2 discloses a method of manufacturing a paperboard plate or bowl comprising a paperboard blank, which is first printed and the one or several layer of a water-proof dispersions are applied and dried. It does not disclose directly and unambiguously 4 layers of protective varnish.

An existing method for manufacturing paper plates, which bear designs - 'decoration', requires a plastic film layer (PET, PP, etc.) which has been printed on the inside and then laminated to the cardboard.

This method of manufacture is a perfectly safe solution in terms of the migration of substances from the paper and ink to the foodstuff deposited on the plate.

The main disadvantage of the above process is the existence of a plastic film layer which is difficult to separate during the recycling process and, as a result, the product does not go into the paper waste stream but into the mixed waste stream.

A second method for manufacturing paper plates bearing designs - "decoration", requires the existence of plastic which has been deposited on the printed surface of the plate by the method of extrusion.

A specific sub-case of the above method is the manufacture of compostable paper plates bearing 'decoration' designs, which requires the existence of a bio-plastic that has been deposited on the surface of the printed plate by the method of extrusion.

This process results in the creation of a layer of plastic film, which is easily distinguishable and protects the migration of substances from the paper and ink to the foodstuff deposited on the plate.

The main disadvantage of the above process is the low fidelity of the printing result with respect to the original specimen, and the limitation of the palette of colors that can be reproduced, as there is a particular inability to achieve light colors due to the method for manufacturing the protective layer. Also, a disadvantage of this process, as with the previous one, is the existence of a plastic film layer which is also difficult to separate during the recycling process, resulting in the product not going into the paper waste stream but into the mixed waste stream.

The scope of the present innovation is to eliminate the plastic film layer on the surface of the paper plate, replacing it with a material and a method of application that will allow contact with foodstuff on the printed surface of the paper, without preventing it from forming into a plate and without losing the protective properties of this material. The main criterion to consider that these plates meet the requirements for contact with all foodstuffs is to pass the test for total migration according to the European Regulation 10/2011 for all kinds of foodstuff for 2 hours at 70°C (method EN 1186) as well as the European Regulations 1935/2004 and 2023/2006 and the German BfR Recommendation XXXVI.

In addition, the purpose of the present innovation includes the achievement of a particularly high print quality and non-deterioration of the print, in relation to the required essay, as well as the economically viable production process of the application method.

The above will be presented below, describing in more detail the method for manufacturing printed paper plates without the use of a plastic film layer on their final surface, according to Independent Claim 1, and with further additional features according to Dependent Claims.

Additional features and advantages of this method will be better understood from a description of the above method and the film application method, which are illustrated for purposes of an indicative example in the attached drawings as below:

On page A with figures of making printed paper plates based on existing methods.
Figure 1 is a perspective view in section of a paper or paperboard backing layer (compostable or not), combined with an ink-printed design (compostable or not), and covered by a protective layer of plastic film.
Figure 2 is a perspective view of a paper or cardboard backing layer (compostable or not), combined with a printed ink design (compostable or not), and covered by a protective layer of plastic film.
Figure 3 is a side view in section of a paper or cardboard backing layer (compostable or not), combined with an ink (compostable or not) printed design, and covered by a protective layer of plastic film.
Figure 4 is a perspective view of a backing layer of paper or paperboard (compostable or not), combined with an ink (compostable or not) printed design, and covered by a protective layer of plastic film, having undergone the process of cutting and creasing.
Figure 5 is a perspective view of a support layer of paper or cardboard (compostable or not), combined with an ink (compostable or not) printed design, and covered by a protective layer of plastic film, having undergone the process of cutting, creasing and molding. This final result has the appearance of a plate with a protective layer of plastic film.

On page B with drawings of the manufacture of printed paper plates using the new method.
Figure 6 is a perspective view in section of a support layer of paper or cardboard (compostable or not), combined with an ink (compostable or not) printed design, and covered by a protective layer of varnish applied 4 times.
Figure 7 is a perspective view of a backing layer of paper or cardboard (compostable or not), combined with an ink (compostable or not) printed design, and covered by a protective layer of varnish applied 4 times.
Figure 8 is a side view in section of a backing layer of paper or paperboard (compostable or not), combined with an ink (compostable or not) printed design, and covered with a protective layer of varnish applied 4 times.
Figure 9 is a perspective view of a backing layer of paper or paperboard (compostable or not), combined with an ink (compostable or not) printed design, and covered with a protective layer of varnish applied 4 times, having undergone the process of cutting and creasing.
Figure 10 is a perspective view of a backing layer of paper or cardboard (compostable or not), combined with an ink (compostable or not) printed design, and covered by a protective layer of varnish applied 4 times, having undergone the process of cutting, creasing and moulding. This final result has the appearance of a plate without a protective layer of plastic film.

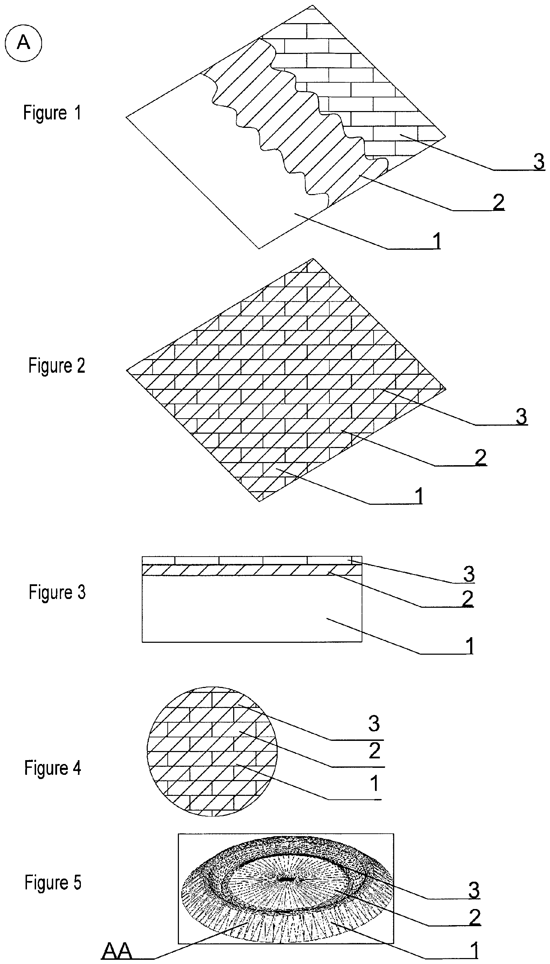

With reference to Figures 1 to 5 (FIG1 to FIGS) on page A (existing methods), the printed - 'decorated' paper plate with the use of a plastic or bio-plastic film layer on its final surface, generally identified by the elements (AA), comprises a support layer (1) made of paper - cardboard (compostable or not), which has at least one printing layer (2) of ink (compostable or not) suitable for the specific application.

The plate (AA) has as a main feature a protective layer (3) on its end surface, which is made of plastic or bio-plastic film.

This layer (3) is evenly distributed over the entire printed surface of the plate, even after it has passed the FIG4 and FIGS forming phases. For this layer (3) the application thickness is usually between 9 µm and 50 µm regardless of the type of material (plastic or bio-plastic).

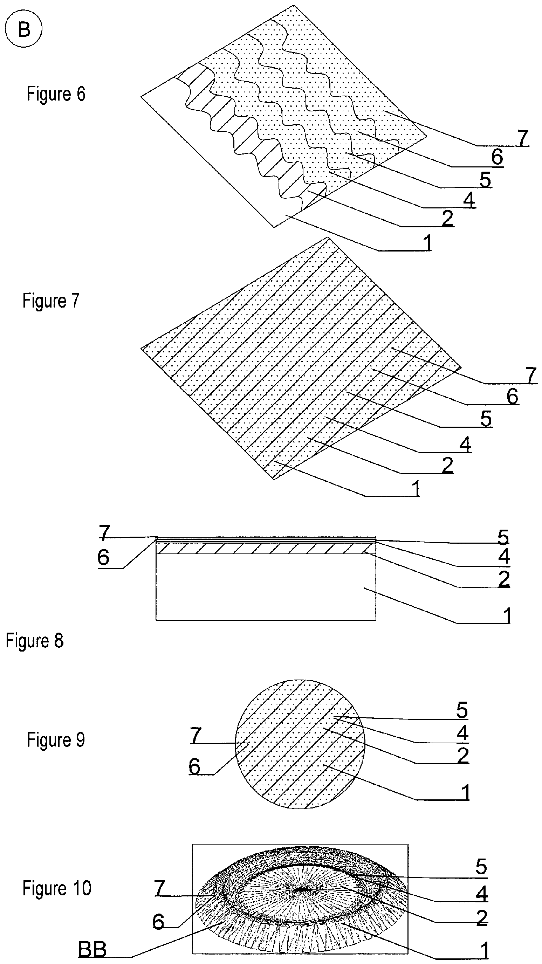

With reference to Figures 6 to 10 (FIG6 to FIG10) on page B (new method), the printed - "decorated" paper plate without the use of a plastic or bio-plastic film layer on its final surface generally identified by the elements (BB), comprises a support layer (1) made of paper - cardboard (compostable or not) which has at least one printing layer (2) of ink suitable for the specific application (compostable or not).

The plate (BB) has as its main feature the protective layers (4), (5), (6) and (7) which are made of the protective varnish, which does not form a plastic film layer, which will be discussed in more detail below.

These layers (4), (5), (6), and (7) are evenly distributed over the entire printed surface of the plate, even after the plate has passed the forming phases FIG9 and FIG10. For the specific layers (4), (5), (6), and (7), the application thickness is different, depending on the amount of application of the layer (2) and depending on the weight of the backing layer (1), as long as they do not form a single construction structure (film).

The application of the layers (4), (5), (6), and (7) may be carried out sequentially or intermittently.

Further information on the method will be given below through the description of some preferred, but not exclusively used, materials, which are required for the complete presentation of the method and which are mentioned for the purpose of an indicative example.

The material used for the backing layer (1) may be, by way of example, the cardboard under the trade name Cupforma Special, which is manufactured by Storaenso in various weights (195 - 350 g/m²). The relative humidity of the board is approximately 6.5% in accordance with ISO 287 and its operating temperature is approximately 20°C.

As a material for the application of a printing layer (2), the ink series UNI-T, manufactured by Siegwerk Büdingen GmbH in various application quantities, depending on the printing design, can be used as an example. The viscosity of the inks is about 20 sec measured in a DIN-4 cup and their temperature is about 20°C.

Regarding the material of the protective layers (4), (5), (6) and (7), as an example, the protective varnish under the trade name PLATEKOTE 954.E, which is manufactured by Michelman International Belgium SRL and has been tested for this application after a series of trials and which, when applied, does not form a plastic film layer structure, i.e., in the practical meaning of this term in the current technique, it cannot be removed as a single piece of film, can be used. The main characteristics of this varnish are its very good resistance to water and grease, as well as its high resistance to thermal stress, which is essential for the plate forming process. It is understood that the varnish can be compostable or non-compostable, like the other two materials (paper, ink).

In detail, the specific method for manufacturing printed paper plates usingvarnish without the use of plastic film (BB) on the final surface includes the following steps:
Step 1: Use of a support layer (1) made of paper - cardboard (compostable or not), having the technical characteristics mentioned above.
Step 2: Printing a design (of any complexity and of any color shade) which constitutes the printing layer (2) on the support layer (1). The printing method may be indicatively and not restrictively flexography, or intaglio printing, etc.
Step 3: Use of a varnish which does not form a plastic film layer structure and is distinguished by its very good resistance to water and grease, as well as high resistance to thermal stress which is essential for the plate forming process.
Step 4: Application of the protective layers (4), (5), (6), and (7) of the varnish from the previous step using a printing method. It is particularly important that the layers are applied in sequence, and before each new layer is applied, a heat source must be provided to remove (evaporate) some of the solvent (water). This removal helps to create a better surface in order to receive the next layer of material and to obtain better adhesion of the layers to each other. The printing method may be indicative and not limiting to flexography. The application of the layers in this way is responsible for creating the desired protection, and the segmental deposition of the varnish helps to achieve a better application of the material on the support (1) and print (2) layers.
Step 5: Cutting and creasing of the single material resulting from Step No. 4.
Step 6: Forming into a final plate (BB) using a heated mold, consisting of two parts (male and female). The material resulting from the fusion of layers (1), (2), (4), (5), (6), (7), and cut to the dimensions of the plate (BB), is inserted between the male and female part of the mold. The male part of the mold shall be heated, indicatively, between 30°C and 70°C and the female part of the mold shall be heated, indicatively, between 120°C and 180°C. The temperature variation of the female and male parts of the mold depends on the amount of layers (1), (2), (4), (5), (6) and (7) being formed. The force exerted between the two parts of the mold is, indicatively, between 150 kg/cm² and 250 kg/cm², and also depends on the amount of layers (1), (2), (4), (5), (6) and (7) to be formed. The surface of the part of the mold which is in contact with the shaped plate (BB), may be lined with a chemically inert material which is resistant to high temperatures, is slippery and has low thermal conductivity. Materials that bring together these properties could be, as an example and not limited to, Silicone or Teflon (PTFE).

The method for manufacturing printed paper plates using varnish without the use of a plastic film on the final surface, is structured so that modifications or variations can be made which fall within the scope of the claims. As mentioned above, the description of certain materials or elements is indicative and not restrictive and may be replaced by other technically equivalent materials or elements without changing the result of the application of the method.

The method for manufacturing printed paper plates using varnish without the use of plastic film on the final surface, has been successfully tested and the plates can pass the test for total migration according to European Regulation 10/2011 for all kinds of foodstuff for 2 hours at 70°C (method EN 1186), and comply with the European Regulations 1935/2004 and 2023/2006 and the German BfR Recommendation XXXVI. Therefore, there is sufficient protection required for the safety of the food placed on the plate (BB) from the migration of substances in the support layer (1) and the printing layer (2). The application of the varnish by the present method with the specified technical characteristics, which replaces the use of a plastic film, prevents direct contact between the printing inks and the foodstuffs to be placed on the plate.

An important result obtained by applying the method, is the absence of any form of plastic film layer, which makes it possible to classify the product in the paper recycling stream.

Another important advantage of the method is the achievement of high fidelity to the print specimen, with no major deviations. It should be mentioned that the aim of the final product is to meet strict printing specifications with a CIELAB deviation tolerance of ΔE₀₀<3.

The economic viability of the method is based on the use of existing technology and mechanical equipment, which makes the method more competitive even with traditional methods of plate making (AA).

Regarding the technical characteristics, materials, etc. mentioned in the claims, they are accompanied by numbers (reference points). These reference points have been cited for the sole purpose of facilitating the understanding of the claims, and therefore, such reference points are not the only ones that can be used in characterizing each technical feature, material, etc., cited as an example. Finally, it should be clarified that the printing patterns shown in the attached drawings are indicative and not limiting.

## Claims

1. A method for manufacturing printed paper plates using varnish without the use of plastic film on the final surface, **characterized in that** it comprises the following steps:
- Step 1: Use of a support layer (1) made of paper - cardboard (compostable or not).
- Step 2: Printing a design (of any complexity and of any color shade) which constitutes the printing layer (2) on the support layer (1).
- Step 3: Use of varnish to create resistance on the printed surface of the plate, with the main characteristics of not forming a plastic film layer structure, having very good resistance to water and grease, and high resistance to the thermal stress required for the plate forming process.
- Step 4: Application of the protective layers (4), (5), (6) and (7) of the above varnish in series using a printing method, with the presence of a heat source between the layer applications to remove some of the solvent (water), and thus the next layer having a better adhesion.
- Step 5: Cutting and creasing of the single material resulting from Step No. 4.
- Step 6: Forming into a final plate (BB) using a heated mold, consisting of two parts (male and female), the material resulting from the fusion of layers (1), (2), (4), (5), (6), (7), and cut to the dimensions of the plate (BB), is inserted between the male and female part of the mold,
whereas,
for the implementation of Step 1, the support layer (1), is in various weights between 195 - 350 g/m², its relative humidity is approximately 6.5% and its operating temperature is approximately 20°C,
for the implementation of Step 2, inks are used, their viscosity is about 20 sec measured in a DIN-4 cup and their temperature is about 20°C,
the varnish, the support layer (1) and the ink, are compostable or non-compostable.

2. The method according to Claim 1, **characterized in that**, for the implementation of Step 6, the heated mold used for forming into a finished plate, consists of a male part heated between 30°C and 70°C, and a female part heated between 120°C and 180°C, and **in that** the temperature variation of the female and male parts of the mold depends on the quantity of layers to be formed (1), (2), which reaches the upper limit value as the weight of the layers (1) and (2) increases.

3. The method according to Claims 1-2, is **characterized in that**, for the implementation of Step 6, force is exerted between the two parts of the heated mold, male and female, which varies between 150 kg/cm² and 250 kg/cm² and depends on the quantity of the layers (1), (2) to be formed, which reaches the upper limit value as the weight of the layers (1) and (2) increases.

4. The method according to Claim 3, **characterized in that** a single layer form is created, consisting of layers (1), (2), (4), (5), (6) and (7).

5. The method according to Claim 1, **characterized in that** for the implementation of Step 2, the printing method of the design is, indicatively, flexography, or intaglio printing.

## Patentansprüche

1. Verfahren zur Herstellung von bedruckten Papierplatten unter Verwendung von Lack ohne Verwendung von Kunststoffolie auf der endgültigen Oberfläche, **dadurch gekennzeichnet, dass** es die folgenden Schritte umfasst:
- Schritt 1: Verwendung einer Stützschicht (1) aus Papier - Karton (kompostierbar oder nicht).
- Schritt 2: Drucken eines Designs (beliebiger Komplexität und beliebiger Farbnuance), das die Druckschicht (2) auf der Stützschicht (1) bildet.
- Schritt 3: Verwendung von Lack, um Widerstand auf der bedruckten Oberfläche der Platte zu erzeugen, mit den Haupteigenschaften, keine Kunststoffilmschichtstruktur zu bilden, mit einer sehr guten Beständigkeit gegen Wasser und Schmiere und einer hohen Beständigkeit gegen die für den Plattenbildungsprozess erforderliche thermische Belastung.
- Schritt 4: Auftragen der Schutzschichten (4), (5), (6) und (7) des obigen Lacks in Serie unter Verwendung eines Druckverfahrens, wobei zwischen den Schichtaufträgen eine Wärmequelle vorhanden ist, um einen Teil des Lösungsmittels (Wasser) zu entfernen, und somit die nächste Schicht eine bessere Adhäsion aufweist.
- Schritt 5: Schneiden und Rillen des Einzelmaterials resultierend aus Schritt Nr. 4.
- Schritt 6: Formen zu einer endgültigen Platte (BB) unter Verwendung einer beheizten Form, bestehend aus zwei Teilen (Patrize und Matrize), wobei das Material aus der Verschmelzung der Schichten (1), (2), (4), (5), (6), (7) entsteht, und zugeschnitten auf die Abmessungen der Platte (BB), zwischen den männlichen und weiblichen Teil (Patrize und Matrize) der Form eingefügt wird,
wobei,
für die Durchführung von Schritt 1 die Stützschicht (1) in verschiedenen Gewichten zwischen 195 - 350 g/m² vorliegt, ihre relative Luftfeuchtigkeit etwa 6,5 % und ihre Betriebstemperatur etwa 20 °C beträgt,
für die Durchführung von Schritt 2 werden Tinten verwendet, deren Viskosität etwa 20 Sek beträgt, gemessen in einem DIN-4-Becher, und deren Temperatur etwa 20°C beträgt,
der Lack, die Stützschicht (1) und die Tinte sind kompostierbar oder nicht.

2. Verfahren nach Anspruch 1, **dadurch gekennzeichnet, dass** für die Durchführung von Schritt 6 die beheizte Form, die zum Formen in eine fertige Platte verwendet wird, aus einem auf 30 C bis 70 C erhitzten Patrizenteil und einem zwischen 120 C und 180 C erhitzten Matrizenteil besteht, sowie dass die Temperaturschwankung der Matrizen- und Patrizenteile von der Anzahl der zu bildenden Schichten (1), (2) abhängt, die den oberen Grenzwert erreicht, wenn das Gewicht der Schichten (1) und (2) zunimmt.

3. Verfahren nach den Ansprüchen 1-2, **dadurch gekennzeichnet, daß** zur Durchführung des Schrittes 6 zwischen den beiden Teilen der erhitzten Form, Patrize und Matrize, eine Kraft ausgeübt wird, die zwischen 150 kg/cm² und 250 kg/cm² variiert und von der Menge der zu bildenden Schichten (1), (2) abhängt, die den oberen Grenzwert erreicht, wenn das Gewicht der Schichten (1) und (2) zunimmt.

4. Verfahren nach Anspruch 3, **dadurch gekennzeichnet, dass** eine einlagige Form aus den Schichten (1), (2), (4), (5), (6) und (7) erzeugt wird.

5. Verfahren nach Anspruch 1, **dadurch gekennzeichnet, dass** zur Durchführung des Schrittes 2 das Druckverfahren des Musters indikativ Flexodruck oder Stichtiefdruck ist.

## Revendications

1. Une méthode pour la fabrication d'assiettes en papier imprimé utilisant du vernis sans l'utilisation de film en plastique sur la surface finale, **caractérisée en ce qu'**elle comprend les étapes suivantes :
- 1^{ere} étape : Utilisation d'une couche de support (1) fabriquée en papier ou en carton (compostable ou non).
- 2^{eme} étape : Impression d'un dessin (de tout niveau de complexité et de toutes nuances de couleurs) qui constitue la couche d'impression (2) par-dessus la couche de support (1).
- 3^{eme} étape : Utilisation du vernis pour créer une résistance de la surface imprimée de l'assiette, caractérisé principalement **en ce qu'**aucune structure de couche de film plastique ne se forme, tandis que la surface présente une très bonne résistance à l'eau et à la graisse et une haute résistance à la charge thermique nécessaire au processus de la mise en forme des assiettes.
- 4^{eme} étape : Application des couches protectrices (4), (5), (6) et (7) du vernis susmentionné en série, selon la méthode d'impression, avec la présence d'une source de chaleur dans les intervalles entre les applications des couches pour éliminer une partie du solvant (eau) et assurer une meilleure adhérence de la couche suivante.
- 5^{eme} étape : Découpage et rainage du matériau unifié qui résulte de la 4^{e} étape.
- 6^{eme} étape : Mise en forme de l'assiette finale (assiette du type "à pain et à beurre") dans un moule chauffé, composé de deux parties (mâle et femelle), le matériau résultant de la fusion des couches (1), (2), (4), (5), (6), (7) et coupé aux dimensions de l'assiette (du type "à pain et à beurre") est introduit entre les parties mâle et femelle du moule,
considérant que,
pour la réalisation de la 1^{ere} étape, la couche de support (1) peut avoir un grammage du papier entre 195 et 350 g/m², son humidité relative est d'environ 6,5%, et sa température de fonctionnement approximative est de 20°C,
pour la réalisation de la 2^{eme} étape, on utilise des encres à viscosité d'environ 20 secondes mesurée dans la coupe normalisée DIN-4 à température de 20°C environ, le vernis, la couche de support (1) et l'encre peuvent être compostables ou non-compostables.

2. La méthode selon la revendication 1, est **caractérisée en ce que**, pour la réalisation de la 6^{e} étape, le moule chauffé utilisé pour mettre en forme l'assiette finale est composé d'une partie mâle, chauffée à une température entre 30°C et 70°C, et d'une partie femelle, chauffée à une température entre 120°C et 180°C, et **en ce que** la variation de température des parties mâle et femelle du moule dépend de la quantité des couches à former (1), (2), qui arrive à sa valeur limite supérieure dans la mesure où le poids des couches (1) et (2) augmente.

3. La méthode selon les revendications 1 et 2, est **caractérisée en ce que**, pour la réalisation de la 6^{eme} étape, une force est exercée entre les deux parties du moule chauffé - mâle et femelle - laquelle varie entre 150 kg/cm² et 250 kg/cm² et dépend de la quantité des couches (1), (2) à former, qui arrive à sa valeur limite supérieure dans la mesure où le poids des couches (1) et (2) augmente.

4. La méthode selon la revendication 3, est **caractérisée en ce qu'**une couche unitaire est créée à partir des couches (1), (2), (4), (5), (6) et (7) unifiées.

5. La méthode selon la revendication 1, est **caractérisée en ce que**, pour la réalisation de la 2^{eme} étape, la méthode d'impression du dessin est, à titre indicatif, la flexographie ou l'impression en taille-douce.
